# EUROPEAN PATENT SPECIFICATION

(11) **EP 1 168 375 B1**
(45) Date of publication and mention of the grant of the patent: **12.09.2007**
(21) Application number: 00902088.4
(22) Date of filing: 04.02.2000
(51) Int. Cl.: H01B 12/14, H01F 6/06

(54) **COVERED SUPERCONDUCTIVE WIRE**
UMHÜLLTER SUPRALEITENDER DRAHT
CABLE SUPRACONDUCTEUR RECOUVERT

(43) Date of publication of application: 02.01.2002
(73) Proprietor: Iwate Tokyo Wire Works, Ltd, Tokyo 144-0056 (JP)
(72) Inventor: ONODERA, Shizuo, Iwate Tokyo Wire Works, Ltd, Isawa-gun, Iwate 029-4201 (JP)
(74) Representative: Callon de Lamarck, Jean-Robert
(86) International application number: PCT/JP2000/000609
(87) International publication number: WO 2001/057888

(56) References cited:
- EP-A- 0 125 747
- EP-A1- 0 472 197
- JP-A- 3 184 215
- JP-A- 9 232 131
- JP-A- 11 007 845
- US-A- 4 694 268

## Description

### Technical Field

This invention relates to a superconducting wire and particularly to a covered superconducting wire having a high breakdown voltage and having excellent ease of use.

### Technical Background

Superconducting wires (SCW) are today widely put to practical use as a coil material and the like for generating a strong magnetic field in an NMR (Nuclear Magnetic Resonance) CT scanner which is equipped with many functions for use as a tomography apparatus for the human body for medical treatment, for example.

However, it is necessary to produce a large current in order to generate such a strong magnetic field, so electrical wire having excellent insulating properties when wound into the shape of a coil, i.e., covered superconducting wire having a high breakdown voltage is required. Furthermore, in order to pass a large current through the entire coil, it is necessary that the current per unit cross-sectional area, i.e., the cross-sectional area of the metal electrical wire be larger, so by making the thickness of the covering around each superconducting wire as thin as possible, the metal area of the cross section increases. The more the cross section metal area increases, the larger the current that can be made to easily flow.

Here, a superconducting wire is manufactured by, for example, covering a previously prepared superconducting wire with a covering material, and then carrying out heat treatment at a high temperature, which is normally 650 - 950°C, in accordance with the type of the superconducting material.

In this manner, a covering material for SCW is used in a strong magnetic field, and there is a heat treatment step at a high temperature during the manufacture of SCW, so a covering material for SCW must have stable insulating properties and good heat resistance, so at present, covering is carried out using glass yarn.

Namely, the conventional method for covering SCW was a covering method in which covering was carried out while braiding glass fibers (referred to below as braid treatment or B treatment). The method which is used with ordinary electric wire including permeation with varnish and hardening thereof cannot be used because of the above mentioned heat treatment at a high temperature, so it was necessary to use B treatment as a method which can secure an insulating covering layer without the use of varnish.

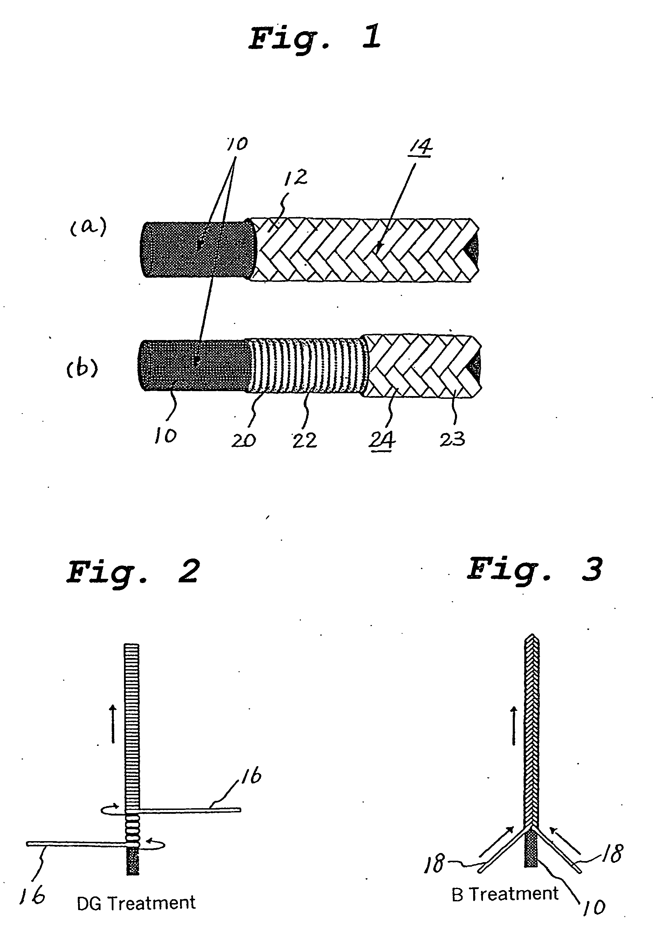

The conditions of B treatment are shown in Figure 1(a). As can be seen from this, the periphery of a superconducting wire 10 is covered by a covering layer 14 formed by B treatment of glass fibers 12. In the past, due to the presence of such a covering layer 14 formed by B treatment, there was the effect that the meshes themselves of the covering layer are fixed in place.

The document US4,694,268 relates to a superconducting solenoid comprising a winding frame, wires formed of filamentary conductors having superconductivity and wound around said winding frame, an insulator formed of alumina fiber material and covering each of said wires, and a resinous material impregnated in between turns of said wires so as to provide a supporting structure.

The described superconducting solenoid comprises an intermediate layer of glass fibers interposed between each of said wires and said insulator.

This document does not provide any information regarding the way the two covering layers are wound around the wire.

The only mentioned purpose related to the use of two layers covering the wire is to reduce the production cost.

### Disclosure of the Invention

However, according to knowledge of the present inventor, at the intersecting portions of a mesh, overlapping of fibers takes place, and in these portions, crevices can be formed, so stable insulating properties could not be obtained. It is conceivable to improve the insulating properties by increasing the thickness of the covering layer, but particularly under the recent conditions in which it is required to pass a large current through superconducting wires, it is not possible to solve the problem simply by increasing the thickness of the covering layer, and there is a strong demand for some other means of improving the insulating properties.

Moreover, SCW is normally formed into a coil for use, so as described above, better insulating properties are demanded of a covering layer which is made as thin as possible, and a covering which is strong in bending and smooth is also demanded. Namely, in the case of superconducting wire, excellent insulating properties are demanded which are excellent with respect to bending, sliding and smoothness properties and which can exhibit a breakdown voltage of at least 500 volts by using a stable, thin covering thickness of at most a prescribed thickness such as at most 200 micrometers or at most 130 micrometers. However, such an excellent insulating material does not presently exist.

Thus, the object of this invention is to provide a covered superconducting wire which does not secure windings by varnish or the like and which aims at improvements in breakdown voltage, bending properties, sliding properties and the like by covering uniformly and with high density with an insulating material having a prescribed given covering thickness.

More concretely, the object of the present invention is to provide a covered superconducting wire having a prescribed covering thickness such as an insulating covering thickness of at most 200 micrometers or at most 130 micrometers and a breakdown voltage of at least 500 volts and heat resistance to at least 700°C and which does not require securing of windings by varnish or the like.

If securing of windings by varnish or the like is not carried out, it is necessary to carry out self-anchoring winding.

Types of winding treatment which can be performed include the above-described B treatment and DG (double glass) treatment as shown in Figure 2. This is a covering method in which two glass yarns are alternatingly spirally wrapped. In contrast another type of winding treatment is SG (single glass) treatment in which one glass yarn is spirally wrapped. In this specification, this will be referred to for convenience by the generic term spiral winding treatment or G treatment, not only for the case of glass fibers but also for alumina fibers or other fibers.

In this G treatment, by using fine glass yarn and making the pitch fine, the covering density of the covering can be increased and stable insulating properties can be obtained. However, G treatment is not a self-anchoring winding method, so it cannot be used.

The present inventor conceived of providing a compound covering layer in which a covering layer formed by B treatment is combined with a covering layer formed by G treatment.

However, in the case of SCW, if B treatment and G treatment using conventional fibers are simply combined with each other, the overall thickness of the covering layer merely becomes large, and it was found that the improvement in insulating properties was the same as for a thick covering.

Furthermore, even with the same thickness as in the past, the density of the covering layer itself was less than that for the case in which G treatment alone is carried out. Namely, it is predicted that the insulating resistance decreases by that amount. In addition, only a small improvement is predicted compared to the case in which conventional B treatment alone is used. Moreover, in contrast to B treatment, in the case of conventional G treatment, thick winding treatment takes place, and it is conceivable that problems can develop with respect to bending properties.

Here, the present inventor studied the above-described points overall and individually in order to solve such problems. He first concentrated on the heat resistance and the insulating properties of the covering fibers and strove to achieve the above objects by wire covering, and then by further investigation, he found the following.
(1) When a covering formed only by B treatment as seen in conventional covered wires is applied to superconducting wires, it is difficult to obtain a high density covering with the covering yarn, overlapping of the yarn occurs in the mesh, and crevices can be formed in these portions. As a result, it was difficult to obtain good insulating properties.
(2) It is not practicable to simply increase the covering thickness to improve the insulating properties. When covering was carried out using finer covering yarn, the covering yarn developed flexibility which was not experienced in the case of conventional thick yarn developed, so even with winding directly on wire, the covering had good adaptability to the surface of the superconducting wire, loosening of winding did not take place, and it was found that an increase in density was possible. This is particularly effective with DG treatment, and there is the possibility of realizing decreases in the thickness of the covering layer.
(3) When B treatment using fine yarns was applied thereto, maintenance of the insulating covering layer was easy and reliably carried out, and even if the superconducting wire was bent, it was not exposed.

Here, the present invention was made in order to realize a high density covering with covering yarns which is not too thick by suppressing the covering thickness to at most a prescribed thickness, such as to at most 200 micrometers or at most 130 micrometers. The essence thereof is a covered superconducting wire of the type having a covering layer of at most a prescribed thickness, characterized in that the covering layer is formed from a first covering layer formed by spiral winding treatment and a second covering layer formed atop the first covering layer by braiding treatment, with high temperature heat treatment preferably being performed after covering.

Furthermore, from another standpoint, the present invention is a covered superconducting wire of the type having a covering layer of at most a prescribed thickness, characterized in that the covering layer is formed from a first covering layer formed of glass fibers or alumina fibers by spiral winding treatment, and a second covering layer formed of glass fibers or alumina fibers atop the first covering layer by braiding treatment, with high temperature heat treatment preferably being performed after covering.

In the present invention, the covering yarn can be a single strand, or it can be a doubled yarn of a plurality of strands or a twisted yarn. Preferably doubled yarn is used in spiral winding treatment and twisted yarn is used in braiding. In a different mode, in braiding treatment, mixed fibers of glass fibers and alumina fibers and preferably half of each are used.

In a preferred mode of the present invention, the first covering layer formed by the above-described spiral winding treatment is wound in a high density by double yarn spiral winding treatment, i.e., by DG treatment. In this mode, one of the two yarns may be glass fibers and the other may be alumina fibers.

In an additional preferred mode of the present invention, the first covering layer formed by the above-described spiral winding treatment is formed of glass fibers, and the second covering layer formed by the above-described braiding treatment is formed of alumina fibers.

### Brief Explanation of the Drawings

Figure 1(a) is an explanatory view of conventional braiding treatment for SCW, and Figure 1(b) is an explanatory view of covered SCW according to the present invention formed by a combination of spiral winding treatment and braiding treatment.
Figure 2 is an explanatory view of DG treatment.
Figure 3 is an explanatory view of B treatment.
Figure 4 is an explanatory view of breakdown voltage measurement.
Figure 5 is an explanatory view of insulating resistance measurement.

### Best Mode for Carrying Out the Invention

In the present invention, by employing a double structure wherein B treatment is performed on top of G treatment in which covering is performed by spirally winding glass yarn having a diameter of at most 0.06 mm, for example, the covering density of the covering can be increased and stable insulating properties can be obtained. The differences from the structure of a conventional covering layer formed only by B treatment (Figure 1(a)) are shown in Figure 1(b).

According to the present invention, as shown in Figure 1(b), a layer 22 of glass fibers or alumina fibers formed by spiral wrapping is provided on a superconducting wire 10 as a first covering layer 20, and on top of this second covering layer 24 formed by B treatment with yarn 23 of glass or alumina is provided. Compared with the case of Figure 1(a), it is noted that the structure is such that the thickness of the covering layer of Figure 1(a) and the total covering layer thickness of the first covering layer and the second covering layer of Figure 1(b) are approximately equal.

In G treatment, as shown by the DG treatment in Figure 2, by wrapping fine glass yarn 16 with a fine pitch on a superconducting wire 10 by G treatment, the covering density of the covering is increased and stable insulating properties can be obtained. When DG treatment is employed as G treatment, by making one an alumina yarn and the other a glass yarn, deterioration of glass fibers can be compensated for by the alumina fibers, and heat resistance can be further increased.

As shown in Figure 3, in B treatment, a superconducting wire 10 is covered by braiding twelve covering yarns 18, for example, so the covering density is small but the strength of the covering is high, the surface is smooth, and it has self-anchoring properties.

In B treatment, it is possible to mix glass yarn and alumina yarn such as by braiding half of each. The effects are obtained that not only can resistance to high temperatures be obtained due to the heat resistance of the glass fibers being reinforced by the addition of the alumina fibers, but also that the costs of the alumina fibers can be decreased by the glass fibers.

SCW is normally used in the shape of a coil, so a covering which is strong in bending with a smooth surface is required. In the present invention, the overall thickness of the covering layer is made less than a prescribed thickness such as at most 200 micrometers or at most 130 micrometers, and first G treatment takes place and then on top of this B treatment takes place so as to overcome the drawbacks of G treatment, and a smooth covering surface is obtained.

Namely, in the case of the present invention, a covering layer formed by B treatment is not utilized simply as an insulating covering layer, but it is used as an anchoring means for the underlying covering layer formed by G treatment.

On the other hand, as for the covering layer formed by G treatment, a covering layer formed by G treatment acts to prevent slipping of the upper covering layer formed by B treatment, and the unexpected effect is obtained that the anchoring by the upper covering layer formed by B treatment is strengthened, and the covering is even further strengthened.

In the past as well, portions of resistance wires and compensating wires have been covered by a combination of DG and B treatment. However, in those cases, the covering had a fairly large thickness of 200-400 micrometers, varnish was baked in the covering layer, and the covering layer acted only as a spacer. In addition, in conventional examples, the insulating properties were determined by the characteristics of the varnish.

Concerning this point, in the case of the present invention, insulating properties are guaranteed only by the insulating layer, so by a covering layer formed by G + B treatment, a stable, high-density covering with self-anchoring properties and having excellent bending properties and a smooth surface is realized.

As already stated, a varnish is not used with superconducting wires because varnish carbonizes during the manufacture of a superconducting magnet and is the cause of a decrease in insulating properties. Accordingly, in the present invention as well, by limiting to "use for superconducting wire", such use of varnish is excluded.

In another mode of the present invention, a first covering layer is formed by glass yarn, and a second covering layer is formed by B treatment using alumina yarn. Alumina yarn has heat resistance, and in particular excellent heat resistance up to 1200°C, and in particular it is excellent from the standpoint that deterioration is not observed during the high temperature heat treatment during the manufacture of SCW wire. Particularly when the second covering layer is formed by B treatment, there is no trouble during rewinding, and there is the excellent effect that rewinding becomes easy.

In this manner, according to the present invention, due to double winding, the durability (wear resistance) of the insulating covering is increased. This improves the ease of operation of those who have to use it, and it simplifies quality control. In addition, in the past, scrupulous care was required during the handling and winding of superconducting wire, but by employing a double winding structure according to the present invention, it is alright even if handled somewhat roughly, and rewinding which was not possible in the past has become possible. In addition, an excellent advantage in actual use is obtained that troubles during transport are eliminated.

Namely, in the past, the strength of the covering was low, and if it was attempted to rewind windings that became scuffed during coiling, the covering became worn to shreds, so rewinding was difficult.

With superconducting wires, it is not possible to easily cut out bad portions and replace them as can be done with ordinary electric wires. For example, in a coil measuring 2,000 meters, if there is a defect in one location along it, the 2,000 meters can no longer be used. In order to repair it, special technology and restrictions are required.

Superconducting wires have a cross-sectional shape which is round or flat. Particularly in the case of flat wire, the covering contacts the corners of the conductor, and due to abrasion and the like between adjoining conductors caused by vibration, there are cases of trouble in which the covering is torn apart greatly.

In addition, strict accuracy is required during the coiling of superconducting wire. For example, if the number of windings in a coil is even one too small, the properties end up changing, so it is necessary to rewind it. However, as stated above, rewinding is difficult, so in many cases, the entire length of the covering had to be stripped off, and covering and coil winding had to be performed again.

According to the present invention, such problems of the prior art are effectively eliminated.

### Examples

### Example 1

In order to provide evidence of the greatest merit of the present invention, which is stable insulating properties, a test for evaluating insulating properties was carried out under the standard conditions with an elemental wire type: Cp wire, glass type: E glass, and with the elemental wire diameter (D), the filament diameter (d), and the coating thickness (Δc) being respectively D = 1.25 mm, d = 5 micrometers, and Δc = 75 micrometers.

### Covering Conditions

### (1) DG + B treatment

DG treatment: Four single yarns having a strand diameter of 450 yarn count were subjected to doubling, and then spiral winding was carried out from the top to the bottom.

B treatment: Four single yarns having a strand diameter of 900 yarn count were subjected to doubling to form one strand, and then twelve strands were braided.

### (2) B treatment

Two single yarns having a strand diameter of 450 yarn count were twisted to form one strand, and then two such strands were subjected to doubling to form a new strand, and then twelve such strands were braided.

### Breakdown Voltage Comparison Test

### (1) Test Method

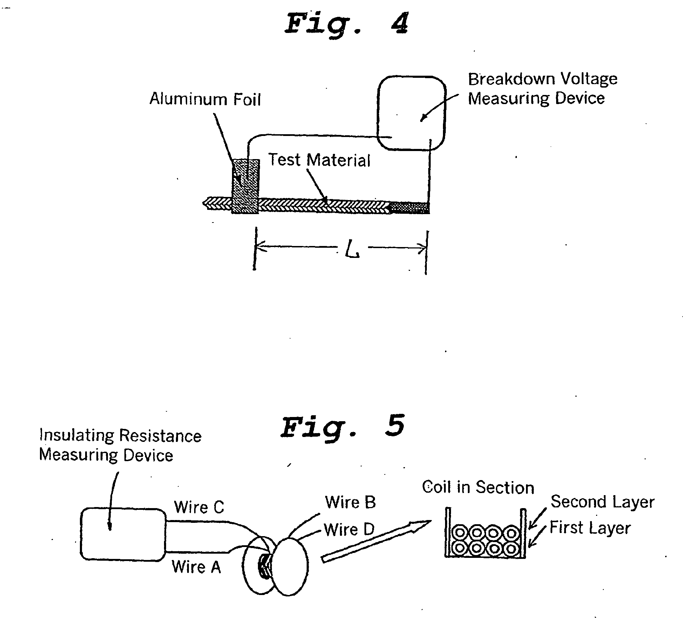

Under standard conditions and covered conditions, as shown in Figure 4, a test material in the form of SCW was wrapped with aluminum foil, the SCW and the aluminum foil were connected by a breakdown voltage measuring device, and the breakdown voltage of each test material was measured.

### (2) Test Results

The test results shown in Table 1.

It was found that since a first covering layer was formed by DG treatment, compared to a conventional covering formed only by B treatment, the resulting layer formed by DG + B treatment exhibited a further improvement in the good insulating properties which are a strong point of DG treatment, and they became nearly 1.5 times as large. The thickness of the total covering layer was the same value of 75 micrometers, so such an improvement in insulating properties can be said to be the synergistic effect of DG + B treatment.

**Table 1**

| Structure of Covering | Breakdown Voltage (V) |
|---|---|
| DG + B Treatment | 580 - 640 |
| B Treatment | 370 - 430 |

### Insulating Resistance Comparison Test

### (1) Test Method

Under standard conditions and under covered conditions, the insulating resistance was measured.

In addition, in order to recreate conditions during actual use, as shown in Figure 5, test materials in the form of two SCW covered wires were prepared, the first wire was wrapped on a reel to form a first layer, the next wire was wrapped atop it to form a second layer, a current was passed between the two insulated SCW covered wires, and the value of insulating resistance was measured.

### (2) Test Results

The test results are shown in Table 2.

By using a first covered layer formed by DG treatment as in the present invention, the covering density of the covering increases, the value of insulating resistance becomes approximately two times that of the conventional case using only B treatment, and moreover stable insulating properties are obtained. Furthermore, by using B treatment for the second covering layer, scuffing of the surface of the covering which is a drawback of DG treatment is prevented, so even in the case in which bending into the shape of a coil takes place, a smooth covering surface can be obtained. In the present example as well, the overall thickness of the covering was the same value of 75 micrometers, so such an effect can be said to be the synergistic effect of DG + B treatment.

R₁ is the difference between the maximum value and the minimum value and shows the scattering of the test values, while R₂ shows this in the form of a percentage.

**Table 2**

| Units: MΩ | | |
|---|---|---|
| Test Run No. | DG + B Treatment | B Treatment |
| 1 | 1033 | 584 |
| 2 | 1183 | 469 |
| 3 | 1183 | 508 |
| Ave. | 1133 | 520 |
| R₁ | 150 | 115 |
| R₂ (%) | 14 | 25 |

### Comparison of the function of DG + B treatment in different uses

A double structure (G + B) treatment obtained by winding of glass yarn is already used for covering of ordinary electrical wires such as resistance wires and compensating wires, but it has not yet been used for the covering of SCW. In addition, compared to the double covering treatment for SCW according to the present invention, there is a big difference between the functions of the covering. The differences between the functions of a covering formed by G + B treatment for SCW and for conventional items are shown in Table 3.

As can be seen from Table 3, the difference between the function of a double covering structure formed by G + B treatment when applied to SCW as in the present invention and when it is used for resistance wire and compensating wire is in the intended use.

During the manufacture of SCW, there is a step of heat treatment at a high temperature, so it must have good heat resistance. Furthermore, it is used in a strong magnetic field, so stable insulating properties are necessary. However, the manufacture thereof is not so complicated, so workability is not particularly required.

On the other hand, the manufacture of conventional resistance wire and compensating wire is complicated, so a covering having high workability is demanded. However, manufacture and use at a high temperature do not take place, so heat resistance is not particularly required.

Accordingly, from the substantive standpoint, it has not been taught to combine G + B treatment for improving the insulating properties of SCW, and it can be said that the above-described improvement of 1.5- 2 times in the insulating properties for the same covering thickness is an unexpected effect.

**Table 3**

| | Superconducting Wire | Conventional Product |
|---|---|---|
| Spiral Winding (DG) | Guarantees insulating properties, ability to keep deviation small | Covering yam acts as spacer, insulating properties guaranteed by baked coating |
| Braiding (B) | Protects spiral winding, guarantees smoothness of surface | |
| Heat Resistance | High due only to glass fibers (at least 800°C) | Low (around 150°C) due to use of baked coating |

### Example 2

In this example, Example 1 was repeated, but in the formation of the second covering layer, glass yarn was replaced by alumina yarn having the same yarn count.

The insulating properties of covered SCW wire manufactured in this manner were evaluated, but the results were the same as in Example 1.

According to the present invention, the second covering layer is provided on the lower layer which is formed by G treatment, so due to the resulting anchoring effect, there is no loosening or fraying of the upper layer formed by B treatment, so incidence of rewinding during the manufacture of a coil of superconducting wire are sharply decreased.

### Possibility of Industrial Use

In this manner, according to the present invention, with a covering thickness of at most 130 micrometers using a covered wire with a diameter of at most 0.06 millimeters, a heat resistance temperature of 800°C is obtained, and the breakdown voltage at that time is at least 500 volts. A covered superconducting wire having such excellent properties has not thus far existed.

## Claims

1. A covered superconducting wire (100) of the type having a covering layer of at most a prescribed thickness, the covering layer being formed from a first covering layer (20) and from a second covering layer (24) formed atop the first covering layer, **characterized in that** the first covering layer is formed by spiral winding treatment, and the second covering layer is formed by braiding treatment.

2. A covered superconducting wire (100) as claimed in claim 1 **characterized in that** the first covering layer is formed by spiral winding treatment of glass fibers or alumina fibers, and the second covering layer is formed by braiding treatment of alumina fibers or glass fibers.

3. A covered superconducting wire as claimed in any one of claims 1-2 wherein the first covering layer is formed by double spiral winding treatment.

4. A covered superconducting wire as claimed in claim 3 wherein the first covering layer is formed by double spiral winding treatment of glass fibers and alumina fibers.

## Patentansprüche

1. Ummantelter supraleitender Draht (100) von dem Typ, der eine Ummantelungsschicht von höchstens einer vorgeschriebenen Dicke hat, wobei die Ummantelungsschicht aus einer ersten Ummantelungsschicht (20) gebildet ist sowie aus einer zweiten Ummantelungsschicht (24), die oben auf der ersten Ummantelungsschicht gebildet ist, **dadurch gekennzeichnet, daß** die erste Ummantelungsschicht durch eine spiralförmige Wicklungsbearbeitung gebildet wird und die zweite Ummantelungsschicht durch eine Beflechtungsbearbeitung gebildet wird.

2. Ummantelter supraleitender Draht (100) nach Anspruch 1, **dadurch gekennzeichnet, daß** die erste Ummantelungsschicht durch eine spiralförmige Wicklungsbearbeitung aus Glasfasern oder Aluminiumoxidfasern gebildet wird und die zweite Ummantelungsschicht durch eine Beflechtungsbearbeitung aus Aluminiumoxidfasern oder Glasfasern gebildet wird.

3. Ummantelter supraleitender Draht nach einem der Ansprüche 1 bis 2, bei dem die erste Ummantelungsschicht durch eine doppelte spiralförmige Wicklungsbearbeitung gebildet wird.

4. Ummantelter supraleitender Draht nach Anspruch 3, bei dem die erste Ummantelungsschicht durch eine doppelte spiralförmige Wicklungsbearbeitung aus Glasfasern und Aluminiumoxidfasern gebildet wird.

## Revendications

1. Câble supraconducteur recouvert (100) du type comportant une couche de recouvrement d'au moins une épaisseur prescrite, la couche de recouvrement étant formée d'une première couche de recouvrement (20) et d'une seconde couche de recouvrement (24) formée au-dessus de la première couche de recouvrement, **caractérisé en ce que** la première couche de recouvrement est formée par un traitement d'enroulement en spirale et la seconde couche de recouvrement est formée par un traitement de tressage.

2. Câble supraconducteur recouvert (100) selon la revendication 1, **caractérisé en ce que** la première couche de recouvrement est formée par un traitement d'enroulement en spirale de fibres de verre ou de fibres d'alumine et la seconde couche de recouvrement est formée par un traitement de tressage de fibres d'alumine ou de fibres de verre.

3. Câble supraconducteur recouvert selon l'une quelconque des revendications 1 à 2, dans lequel la première couche de recouvrement est formée par un traitement d'enroulement en spirale double.

4. Câble supraconducteur recouvert selon la revendication 3, dans lequel la première couche de recouvrement est formée par un traitement d'enroulement en spirale double de fibres de verre et de fibres d'alumine.
